# EUROPEAN PATENT SPECIFICATION

(11) **EP 1 291 562 B1**
(45) Date of publication and mention of the grant of the patent: **02.05.2007**
(21) Application number: 02445108.0
(22) Date of filing: 05.09.2002
(51) Int. Cl.: F16J 15/32

(54) **Sealing device**
Dichtungsvorrichtung
Dispositif d'étanchéité

(30) Priority: 07.09.2001 SE 0102976
(43) Date of publication of application: 12.03.2003
(73) Proprietor: Aktiebolaget SKF, 415 50 Göteborg (SE)
(72) Inventor: Olsson, Henrik, 641 45 Katrineholm (SE); Stendahl, Jörgen, 643 93 Vingaker (SE)
(74) Representative: Westman, Per Börje Ingemar

(56) References cited:
- AT-B- 332 687
- DE-A- 2 104 141
- DE-A- 19 841 123
- US-A- 4 159 828

## Description

### TECHNICAL FIELD

The invention relates to a fat-lubricated, split bearing housing having sealing device for sealing off an opening between a shaft and an opening in the housing, which sealing device comprises a main body, which main body is arranged in a circumferential groove in the bearing housing opening, the sealing device being divided in two halves by a diametrical cut, and which sealing device is provided with sealing lips spaced apart from each other and forming an intermediate fat reservoir. Such a sealing device is known from AT 332687 B.

### BACKGROUND OF THE INVENTION

For sealing off an opening between a shaft and a split bearing housing it has been used sealing devices in the form of sealing rings comprising a main body and a sealing lip, which sealing rings are divided in two halves by means of a diametrical cut.

When such a known sealing device is mounted in a bearing housing, one seal half is positioned in a groove at an opening in the lower bearing housing half and the shaft is positioned in the opening. Afterwards, the other seal half is positioned in a groove in the upper bearing housing half and the upper bearing housing half is positioned over the lower half. Then, the two bearing housing halves are pressed against each other.

Unfortunately, there is a problem with this type of sealing devices in that the sealing function can be easily lost. As the sealing lip, which shall engage the shaft when the two bearing housing halves are pressed against each other, is weak it has a tendency of becoming partially folded during assembly. This folding motion is however almost impossible to visually detect as the lip is normally hidden by the bearing housing. However, it will be apparent if the lip has been folded, as its sealing function has been lost.

For other purposes there are also other types of sealing devices in the prior art, which sealing devices function in other ways than the above described and which sealing devices are provided with a plurality of sealing lips to ensure good sealing effect.

For example, it is prior known from US 5,908,249 and US 4,586,720, sealing devices in the form of sealing rings, which are provided with a plurality of sealing lips that are supposed to be brought to sealing engagement against a bearing assembly. However, none of these sealing devices has the same function or object as the present invention, and hence they cannot be said to solve the same problem as the present invention. For example, the sealing device in US 4,586,720 relates to neck seals of the type employed on the roll necks of rolls in a rolling mill and is intended to prevent water from infiltrating into the bearing and contaminating the bearing oil while at the same time preventing loss of oil from the bearing.

### SUMMARY OF THE INVENTION

The objects of the present invention are therefore to provide a fat-lubricated split bearing housing with a sealing device for sealing off an opening between a shaft and the housing, which sealing device:
- has a design totally preventing folding of the sealing lips during assembly of the split bearing housing,
- has a design providing an excellent sealing effect and an easy assembly, and
- has a design preventing the sealing lips from being worn down too quickly because of pressure in the fat reservoir.

These objects have been solved in that reinforcing portions are arranged between the main seal body and the sealing lips for preventing the sealing lips from being subjected to large pressure variations thereby ensuring sealing engagement between the sealing lips and a shaft, when an upper bearing housing half provided with the upper seal half is mounted onto the shaft, which shaft is resting in a lower bearing housing half provided with the lower seal half.

### BRIEF DESCRIPTION OF THE DRAWINGS

In the following, a preferred embodiment of the present invention will be described with reference to enclosed drawings, in which:
Fig. 1 shows a schematic top view of the split sealing device according to the preferred embodiment,
Fig. 2 shows a schematic view in cross section of the sealing device,
Fig. 3 shows a schematic, exploded, partially sectioned view of the parts comprised in the bearing assembly according to the preferred embodiment, and
Fig. 4 shows a schematic view in cross section of the sealing device mounted in the bearing housing.

### DESCRIPTION OF A PREFERRED EMBODIMENT

Hereby, a preferred embodiment of the present invention will be described and the sealing device as a whole will be denoted 10 in the drawings.

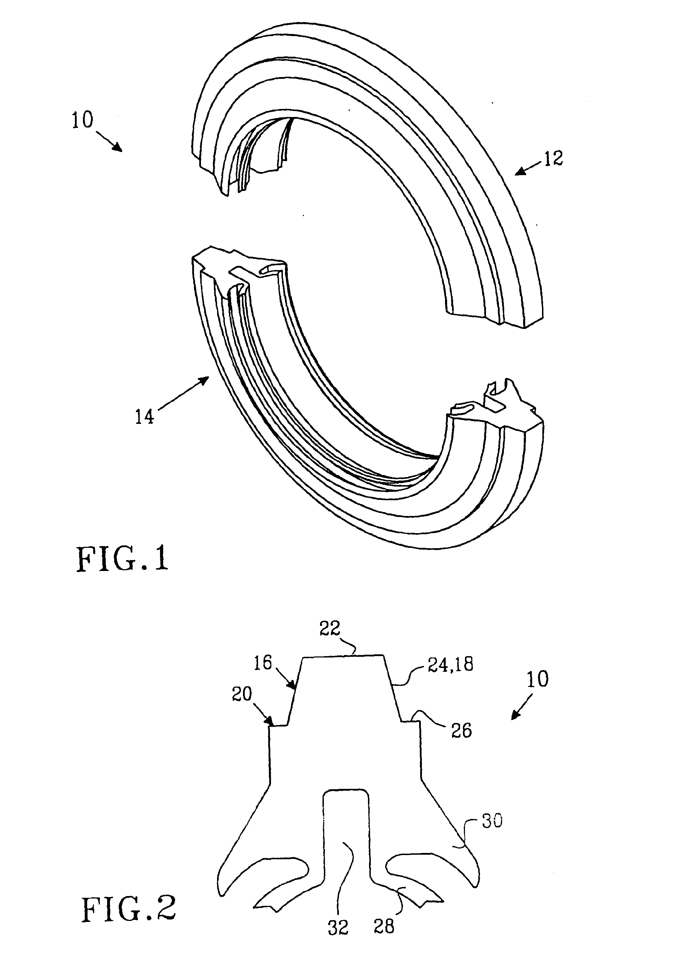

In Fig. 1, it can be seen that the sealing device 10 is substantially annular, forming a ring, which ring has been split in two halves, an upper half 12 and a lower half 14, by a diametrical cut.

Considering the cross section in Fig. 2, the sealing device 10 is arranged with a main body 16 which main body 16 in a first end is arranged with a protrusion 18 with a shoulder 20 on either side. The protrusion 18 has a plane top surface 22 and outwardly inclined side surfaces 24 which extend down to the shoulders 20, which each has a plane surface 26 substantially parallel with the top surface 22.

The second end of the main body 16 is arranged with sealing lips 28 and reinforcing portions 30. In this preferred embodiment there are two sealing lips 28 spaced apart from each other and forming an intermediate space 32 used as a reservoir for fat. The reservoir 32 is substantially rectangular and preferably centred under the protrusion 18 of the main body 16. Furthermore, the reservoir 32 is preferably half as wide as the protrusion 18. The sealing lips 28 are directed in opposite directions and are outwardly conical.

There are two reinforcing portions 30 in the preferred embodiment of the sealing device 10, and they are arranged outside the sealing lips 28 and between the main seal body 16 and the sealing lips 28. Furthermore, the reinforcing portions 30 are made with a material thickness of substantial thickness and they have a rather stiff design that can protect the sealing lips from large dirt particles and that can sustain most of the bending forces acting on the sealing device 10 during assembly. The sealing lips 28, on the other hand, have a substantially smaller material thickness than the reinforcing portions 30 and are therefore more easily bent.

Preferably, each half of the sealing device 10 is made in one piece by injection moulding in a material being somewhat flexible, such as for example a polymeric material, such as for example polyurethane.

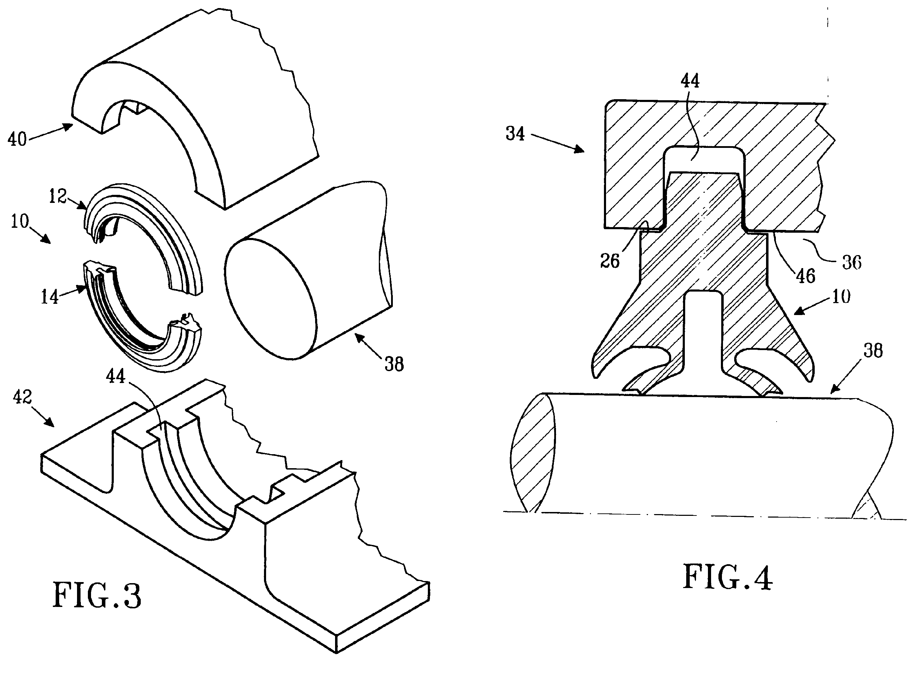

In the following, and with reference to Fig. 3, it will be described how the sealing device 10 of the present invention is mounted in a bearing housing 34.

As mentioned before, the sealing device 10 is intended for sealing off an opening 36 between a shaft 38 and a fat-lubricated split bearing housing 34. The bearing housing 34 comprises two halves, an upper bearing housing half 40 and a lower bearing housing half 42. The bearing housing opening 36 is arranged with a circumferential groove 44 intended for the sealing device 10, which groove 44 has a form substantially corresponding to that of the protrusion 18, although the groove 44 has a rectangular cross section, se Fig. 4, having a width that is a bit smaller than the width of the protrusion 18 at its thickest portion.

When assembling, the lower seal half 14 is positioned in the groove 44 in the lower bearing housing half 42. As the protrusion 18 of the sealing device 10 is slightly larger than the groove 44, it has to be pressed into it. The sealing device 10 shall be pressed so far into the groove 44 that the shoulders 20 are brought into contact with the bearing housing surface 46 near the groove 44. Similarly, the upper seal half 12 is positioned in the upper bearing housing half 40. Preferably, the reservoir 32 is then filled with fat.

A shaft 38 is positioned in the opening 36 in the lower bearing housing half 42, and the upper bearing housing half 40 is mounted onto the shaft 38 and the lower bearing housing half 42. When pressing the two bearing housing halves 40, 42 together, the sealing lips 28 are brought into sealing engagement with the shaft 38. An excellent and reliable sealing can be ensured thanks to the stiff, bending resistant, reinforcing portions 30, which existence in the sealing device 10 prevent the sealing lips 28 from folding.

During use of the bearing arrangement, the bearing housing 34 needs to be filled up with new fat from time to time. However, when new fat is pressed into the bearing housing 34, it is warmed up when contacting the warmer bearing, resulting in that a large pressure is built up inside the housing. The internal temperature of the re-lubricated bearing will reach a peak, soon after started to operate, and ten the operating temperature will drop to a much lower level when the fat has been distributed in the bearing and bearing housing, due to the mutual rotation of the shaft and the bearing components. This temperature increase and following temperature drop will of course result in pressure variations. Such pressure variations usually affect the sealing lips 28 negatively in that they are pressed harder against the shaft 38, causing them to be quickly worn out. However, the reinforcing portions 30 in the present invention decrease this negative effect by carrying a large amount of the pressure so that the sealing lips are less exposed to it.

It is to be understood that the invention is not restricted to the embodiment described above and shown in the drawings, but may be varied or modified within the scope of the appended claims.

### LIST OF REFERENCE NUMERALS

- 10: sealing device
- 12: upper seal half
- 14: lower seal half
- 16: main body
- 18: protrusion
- 20: shoulder
- 22: top surface (protrusion)
- 24: side surface (protrusion)
- 26: surface (shoulder)
- 28: sealing lips
- 30: reinforcing portions
- 32: fat reservoir
- 34: bearing housing
- 36: opening
- 38: shaft
- 40: upper bearing housing half
- 42: lower bearing housing half
- 44: groove
- 46: surface (bearing housing)

## Claims

1. A fat-lubricated, split bearing housing (34) having a sealing device (10) for sealing off an opening (36) between a shaft (38) and an opening in the housing, and which sealing device (10) comprises a main body (16), which main body (16) is arranged in a circumferential groove (44) in the bearing housing opening (36), the sealing device (10) being divided in two halves (12, 14) by a diametrical cut, and which sealing device halves (10) are each provided with sealing lips (28) made integral with said main body (16) and which sealing lips in each sealing device half are spaced apart from each other and forming an intermediate fat reservoir (32),
***characterized in,***
**that** stiff, bending resistant reinforcing portions (30) are arranged between the main seal body (16) and the sealing lips (28) and integrally therewith for preventing the sealing lips (28) from being subjected to large pressure variations by carrying a large amount of the pressure, thereby ensuring sealing engagement between the sealing lips (28) and a shaft (38), when an upper bearing housing half (40) arranged with the upper seal half (12) is mounted onto the shaft (38), which shaft (38) is resting in a lower bearing housing half (42) arranged with the lower seal half (14).

2. A bearing housing with a sealing device according to claim 1,
***characterized in,***
**that** the main seal body (16), in direction towards the bearing housing (34), is arranged with shoulders (20), on which shoulders (20) the bearing housing surface (46) near the groove (44), can bear, and
**that** the main seal body (16) in direction towards the bearing housing (34) has a protrusion (18) between said shoulders (20), which protrusion (18) has a form substantially corresponding to the groove (44) of the bearing housing (34).

3. A bearing housing with a sealing device according to claim 1,
***characterized in,***
**that** the reinforcing portions (30) are made with a material thickness of substantial thickness, whereas the sealing lips (28) have a substantially smaller material thickness.

4. A bearing housing with a sealing device according to claim 1,
***characterized in,***
**that** it is made of a polymeric material, for example polyurethane.

## Patentansprüche

1. Fettgeschmiertes, geteiltes Lagergehäuse (34) mit einer Dichtung (10) zum Abdichten einer Öffnung (36) zwischen einer Welle (38) und einer Öffnung in dem Gehäuse, wobei die Dichtung (10) einen Hauptkörper (16) aufweist, der in einer Umfangsnut (44) in der Lagergehäuseöffnung (36) angeordnet ist und durch einen diametralen Schnitt in zwei Hälften (12, 14) geteilt ist, und die Dichtungshälften (10) jeweils mit Dichtlippen (28) ausgebildet sind, die einstückig mit dem Hauptkörper (16) ausgebildet sind, wobei die Dichtlippen in jeder Dichtungshälfte mit Abstand zueinander angeordnet sind und ein zwischenliegendes Fettreservoir (32) bilden, **dadurch gekennzeichnet, dass** zwischen dem Hauptdichtungskörper (16) und den Dichtlippen (28) einstückig mit diesen steife, Biegungen widerstehende Verstärkungsbereiche (30) angeordnet sind, um die Dichtlippen (28) daran zu hindern, großen Druckänderungen ausgesetzt zu sein, indem sie eine große Menge des Druckes aufnehmen, um **dadurch** die Dichtanlage zwischen den Dichtlippen (28) und einer Welle (38) sicherzustellen, wenn eine obere Lagergehäusehälfte (40), die mit der oberen Dichtungshälfte (12) versehen ist, auf der Welle (38) montiert wird, wobei die Welle (38) in einer unteren Lagergehäusehälfte (42) ruht, die mit der unteren Dichtungshälfte (14) versehen ist.

2. Lagergehäuse mit einer Dichtung nach Anspruch 1, **dadurch gekennzeichnet, dass** der Hauptdichtungskörper (16) in einer Richtung zu dem Lagergehäuse (34) hin mit Absätzen (20) ausgebildet ist, an denen sich die Lagergehäuseoberfläche (46) nahe der Nut (44) abstützen kann, und dass der Hauptdichtungskörper (16) in einer Richtung zu dem Lagergehäuse (34) hin einen Vorsprung (18) zwischen den Absätzen (20) besitzt, wobei der Vorsprung (18) eine im wesentlichen der Nut (44) des Lagergehäuses (34) entsprechende Form besitzt.

3. Lagergehäuse mit einer Dichtung nach Anspruch 1, **dadurch gekennzeichnet, dass** die Verstärkungsbereiche (30) mit einer Materialstärke von wesentlicher Dicke hergestellt sind, während die Dichtlippen (28) wesentlich kleinere Materialstärken haben.

4. Lagergehäuse mit einer Dichtung nach Anspruch 1, **dadurch gekennzeichnet, dass** diese aus einem Polymermaterial, beispielsweise Polyurethan hergestellt ist.

## Revendications

1. Boîtier (34) de palier en deux pièces, lubrifié à la graisse, comportant un dispositif d'étanchéité (10) pour obturer une ouverture (36) entre un arbre (38) et une ouverture dans le boîtier, ledit dispositif d'étanchéité (10) comprenant un corps principal (16), lequel est placé dans une gorge périphérique (44) prévue dans l'ouverture de boîtier de palier (36), le dispositif d'étanchéité (10) étant divisé en deux moitiés (12, 14) par une fente diamétrale, et les moitiés de dispositif d'étanchéité (10) étant pourvues chacune de lèvres d'étanchéité (28) intégrées audit corps principal (16), et lesdites lèvres d'étanchéité de chaque moitié de dispositif d'étanchéité étant espacées l'une de l'autre et formant un réservoir à graisse intermédiaire (32),
**caractérisé en ce que** des parties de renforcement rigides, résistant à la flexion (30) sont placées entre le corps de joint principal (16) et les lèvres d'étanchéité (28) et intégrées à ceux-ci pour empêcher les lèvres d'étanchéité (28) d'être soumises à de grandes variations de pression en supportant une grande partie de la pression, ce qui assure un contact étanche entre les lèvres d'étanchéité (28) et un arbre (38), quand une moitié de boîtier de palier supérieure (40) munie de la moitié de joint supérieure (12) est montée sur l'arbre (38), ledit arbre (38) reposant sur une moitié de boîtier de palier inférieure (42) munie de la moitié de joint inférieure (14).

2. Boîtier de palier muni d'un dispositif d'étanchéité selon la revendication 1, **caractérisé en ce que** :
le corps de joint principal (16), en direction du boîtier de palier (34), est pourvu d'épaulements (20) sur lesquels peut s'appuyer là surface de boîtier de palier (46) proche de la gorge (44),
et **en ce que** le corps de joint principal (16), en direction du boîtier de palier (34), comporte une saillie (18) entre lesdits épaulements (20), ladite saillie (18) ayant une forme correspondant sensiblement à la gorge (44) du boîtier de palier (34).

3. Boîtier de palier muni d'un dispositif d'étanchéité selon la revendication 1, **caractérisé en ce que** les parties de renforcement (30) sont faites avec un matériau ayant une épaisseur substantielle, tandis que les lèvres d'étanchéité (28) ont une épaisseur sensiblement inférieure.

4. Boîtier de palier muni d'un dispositif d'étanchéité selon la revendication 1, **caractérisé en ce qu'**il est fait d'un matériau polymère, par exemple du polyuréthane.
